# EUROPÄISCHE PATENTANMELDUNG

(11) **EP 1 514 747 A1**
(43) Veröffentlichungstag der Anmeldung: **16.03.2005**
(21) Anmeldenummer: 04027486.2
(22) Anmeldetag: 14.12.1999
(51) Int. Cl.: B60R 21/34, B62D 25/10

(54) **Als Fussgängerschutz ausgelegte Kraftfahrzeug-Fronthaube**

(30) Priorität: 21.01.1999 DE 19902311
(62) Teilanmeldung aus: 99124828.7
(71) Anmelder: Volkswagen AG, 38436 Wolfsburg (DE)
(72) Erfinder: Siebels, Johann, 38444 Wolfsburg (DE)

(57) **Zusammenfassung**

Eine fußgängerfreundliche Kraftfahrzeug-Fronthaube besteht aus einer Unterstruktur (1), einer Deckschale (2) und einer als Deformationsschicht dienenden Zwischenschicht (3), die die Deckschale (2) gleichsam schwimmend ohne direkte Abstützung an der Unterstruktur (1) trägt. Deckschale (2) und Zwischenschicht (3) sind zur Erzeugung eines Deformationswegs beim Aufprall des Kopfes eines Kindes ausgelegt, während eine Verformung der Unterstruktur (1) erst beim Kopfaufprall eines Erwachsenen erfolgt. Dadurch ist die Fronthaube für den Aufprallschutz für Fußgänger unterschiedlicher Größe optimiert.

## Beschreibung

Die Erfindung betrifft eine als Fußgängerschutz ausgelegte Kraftfahrzeug-Fronthaube.

In großem Umfange im Einsatz sind Fronthauben, die als wesentliche Bestandteile zwei Bleche, nämlich ein Außenblech und ein als Unterstruktur zu bezeichnendes Innenblech, aufweisen, die an den Haubenrändern miteinander verbunden sind. Derartige Fronthauben lassen sich relativ steif ausführen, wobei zusätzliche Maßnahmen, beispielsweise nach Art von Sollknickstellen, getroffen sein können, die bei einem Frontalcrash eine gezielte Umsetzung von Aufprallenergie in Verformungsarbeit sicherstellen. Während eine derartige bekannte Gestaltung einer Fronthaube primär dem Schutz von Fahrzeuginsassen bei einem Frontalcrash dient, befaßt sich die Erfindung mit einer "fußgängerfreundlichen" Ausbildung einer Fronthaube. Bekanntlich sind Fußgänger bei Kollisionen mit Kraftfahrzeugen besonders gefährdet, da der Vorderwagen eines Kraftfahrzeugs im Vergleich zu einem Fußgänger sehr hart und steif ist. Insbesondere besteht die Gefahr, daß beim Aufprall eines Fußgängers von oben auf die Fronthaube des Fahrzeugs schwere Kopfverletzungen entstehen, da die Fronthaube, wie dargelegt, steif ausgelegt ist und demgemäß erst bei großer Aufprallenergie verformt wird.

Das Problem des Fußgängerschutzes, d.h. des Schutzes eines Fußgängers bei Kollision mit dem Kraftfahrzeug, wird noch dadurch erschwert, daß die entsprechenden Schutzmaßnahmen für unterschiedlich große Fußgänger, nämlich Kinder und Erwachsene, wobei die Erwachsenengröße ebenfalls variiert, unterschiedlich ausgelegt sein müssen.

Der Erfindung liegt die Aufgabe zugrunde, eine gattungsgemäße Kraftfahrzeug-Fronthaube zu schaffen, die einerseits bei betriebsbedingten Belastungen, insbesondere Öffnen und Schließen der Haube, in keiner Weise deformiert wird, so daß keine sichtbaren Veränderungen entstehen, die aber andererseits bei Kollision mit einem Fußgänger die Aufprallenergie in Verformungsarbeit umsetzend wirkt und dabei eine Anpassung an die Verhältnisse bei unterschiedlich großen Fußgängern bewirkt. Dabei ist insbesondere an Kinder und Erwachsene gedacht, jedoch fallen unter den Begriff "Fußgänger unterdurchschnittlicher Größe" auch sehr kleine erwachsene Personen.

Die erfindungsgemäße Lösung dieser Aufgabe besteht in den kennzeichnenden Merkmalen des Hauptanspruchs, vorteilhafte Ausführungsformen der Erfindung beschreiben die Unteransprüche.

Wie im Hauptanspruch im einzelnen zum Ausdruck gebracht, ist durch entsprechende Wahl der Steife der verschiedenen Bestandteile der Fronthaube dafür gesorgt, daß im normalen Betrieb des Fahrzeugs, also unter den üblichen Beanspruchungen der Fronthaube, praktisch keine Verformung derselben - weder bleibende Verformung noch sichtbare elastische Verformung - auftritt, so daß die erfindungsgemäße Fronthaube alle im Betrieb an eine Fronthaube zu stellenden Anforderungen erfüllt. Andererseits ist aber infolge der "schwimmenden" Lagerung der Deckschale allein über die deformierbare Zwischenschicht an der Unterstruktur die Möglichkeit geschaffen, daß beim Aufprall eines Fußgängers auf die Deckschale diese unter Zusammenstauchung der Zwischenschicht in Richtung auf die Unterstruktur etwas nachgibt, so daß ein Deformationsweg geschaffen ist und die gewünschte Umsetzung von kinetischer Energie (Aufprall des Fußgängers auf die Deckschale) in Verformungsarbeit (Stauchen der Zwischenschicht) erfolgt. Dabei bleibt, zumindest sofern es sich um kleine Fußgänger handelt, die Unterstruktur in ihrer Form unverändert, so daß sie eine starre Auflage für Zwischenschicht und Deckschale bildet. Handelt es sich aber um einen großen Fußgänger, so erfolgt nach Beendigung des Deformationswegs der Zwischenschicht nicht ein starres Auffangen des Kopfes, sondern ein nachgiebiges Auffangen durch Deformation der Unterstruktur, allerdings mit einer erheblich steileren Kraft-Weg-Kennung. Während also - sofern die Deckschale nicht gemäß Anspruch 7 in Deformationsbereiche unterteilt ist - beim Kopfaufprall eines kleinen Fußgängers keinerlei bleibende Deformation der Fronthaube auftritt, ist bei der Erfindung zum Schutz beim Kopfaufprall eines großen Fußgängers eine bleibende Deformation der Unterstruktur vorgesehen.

Verständlicherweise ist es zum Insassenschutz auch möglich, in an sich bekannter Weise die Unterstruktur mit quer zur Fahrzeuglängsachse verlaufenden Sollknickstellen zu versehen, so daß sie sich beim Crash zusammenfaltet und dadurch ein Eindringen des rückwärtigen Endes der Fronthaube in den Fahrzeuginnenraum vermieden ist.

Mehrere Ausführungsbeispiele der Erfindung werden im folgenden anhand der Zeichnung erläutert. Es zeigen:
- Figur 1: einen Querschnitt durch den Vorderbau eines Kraftfahrzeugs, das mit der erfindungsgemäßen Fronthaube ausgerüstet ist,
- Figur 2: vergrößert die in Figur 1 bei II herausgehobene Einzelheit,
- Figur 3: eine andere Ausbildung der Einzelheit II,
- Figur 4: eine weitere Ausführungsform der Erfindung im Querschnitt durch das Fahrzeug,
- Figur 5: die in Figur 4 bei V herausgehobene Einzelheit,
die Figuren 6, 7, 8 und 9 in Querschnitten durch das Fahrzeug weitere mögliche Ausgestaltungen der Erfindung,
- Figur 10: im Querschnitt und
- Figur 11: in der in Figur 10 mit XI-XI bezeichneten Schnittansicht eine weitere Ausgestaltung und
die Figuren 12 und 13 in Querschnitten durch das Fahrzeug spezielle Ausgestaltungen der Unterstruktur und der Deckschicht.

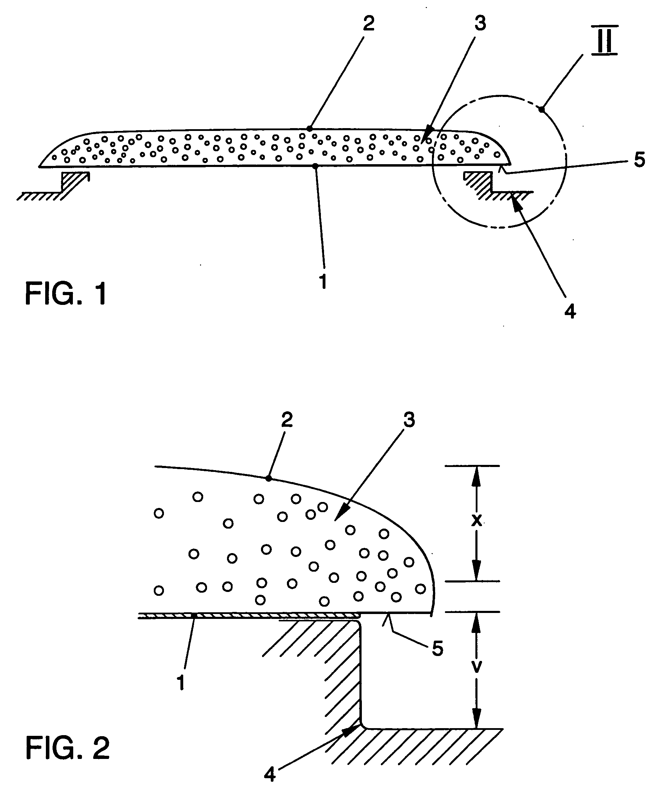

Betrachtet man zunächst die Figuren 1 und 2, so erkennt man unschwer den grundsätzlichen Aufbau der Fronthaube aus der steifen Unterstruktur 1, der ebenfalls eine bestimmte Steife besitzenden Deckschale 2 und der energieabsorbierenden Zwischenschicht 3, die die Deckschale 2 indirekt mit der Unterstruktur 1 verbindet.

Zur Halterung der also aus den drei Schichten 1, 2 und 3 zusammengesetzten Fronthaube am Fahrzeugaufbau 4 dienen in bekannter Weise Scharniere und eine Schloßanordnung; die entsprechenden Beschläge sind frontklappenseitig bevorzugt an der Unterstruktur 1 befestigt. Sie sind, da bestens bekannt, figürlich nicht dargestellt.

Entscheidend ist aber, daß durch diese Wahl der Anlenkungsstellen der Beschläge und das Fehlen direkter Berührungen zwischen Deckschale 2 und Unterstruktur 1 die Deckschale 2 an der Unterstruktur 1 gleichsam "schwimmend" über die Zwischenschicht 3 gelagert ist.

Wie besonders deutlich aus Figur 2 ersichtlich, muß zumindest dann, wenn die Deckschale 2 die Zwischenschicht 3 seitlich übergreifend geformt ist, im Fahrzeugaufbau 4 Freigang V solcher Größe vorgesehen sein, daß die Ränder der Deckschale 2 beim Aufprall eines Fußgängers unter Zusammenstauchen der Zwischenschicht 3 um den Deformationsweg x nach unten wandern können, ohne daß eine Abstützung dieser Ränder am Fahrzeugaufbau erfolgt.

An dieser Stelle sei eingefügt, daß - was als Vorteil zu bewerten ist - als Materialien für die harten Teile der Fronthaube, also die Teile 1 und 2, an sich bewährte Werkstoffe eingesetzt werden können, beispielsweise Stahl, Aluminium, Kunststoffe und Verbundwerkstoffe, insbesondere Faserverbundwerkstoffe. Alle diese Materialien können auch in beliebigen Kombinationen für die verschiedenen schalenförmigen Bestandteile der Haube vorgesehen sein.

In dem bisher behandelten Ausführungsbeispiel (Figuren 1 und 2) ist als Material für den Aufprallenergieabsorber, d.h. die energieabsorbierende Zwischenschicht 3, ein Schaumstoff gewählt. Hierbei kann es sich um bekannte Kunststoffschäume, z.B. auf Polyurethan- oder Polypropylen-Basis, handeln. Diese Materialien können in Situ eingeschäumt und verklebt oder als Formteil vorgeformt und dann eingeklebt bzw. partiell mechanisch mit einem schalenförmigen Bestandteil der Fronthaube verklammert werden. Als Schaumdichte empfiehlt sich eine solche von 20 g/l bis 90 g/l. Einsatz finden können auch Metallschäume, insbesondere Aluminiumschäume, mit einer Schaumdichte von 50 g/l bis 300 g/l und einer Porenweite von maximal etwa 20 % der Dicke der Zwischenschicht 3. Derartige Aluminiumschäume können schmelzmetallurgisch hergestellt werden; die Formgebung kann zum Teil beim Abziehprozeß erfolgen, so daß eine mechanische Endbearbeitung erforderlich wird. Als Fügetechnik empfiehlt sich Kleben, Schweißen, z.B. Laserschweißen, Verschrauben und Verklammern.

Wie diese Aufzählungen erkennen lassen, ist die Erfindung nicht auf bestimmte Materialien und Herstellverfahren angewiesen.

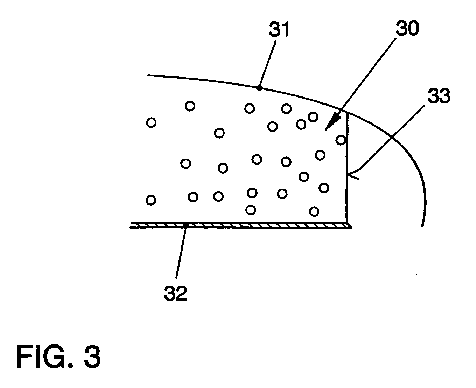

Auch in dem Ausführungsbeispiel nach Figur 3 ist die Zwischenschicht 30, die also einen zwischen der Deckschale 31 und der Unterstruktur 32 liegenden Energieabsorber bildet, aus Schaumstoff hergestellt. Während aber in dem Ausführungsbeispiel nach den Figuren 1 und 2 die Zwischenschicht 3 eine horizontale untere Begrenzung 5 aufweist, liegt die entsprechende Begrenzung 33 der Zwischenschicht 30 in Figur 3 senkrecht, so daß seitlich zwischen ihr und dem abgebogenen Randbereich der Deckschale 31 ein rinnenartiger Freiraum verbleibt.

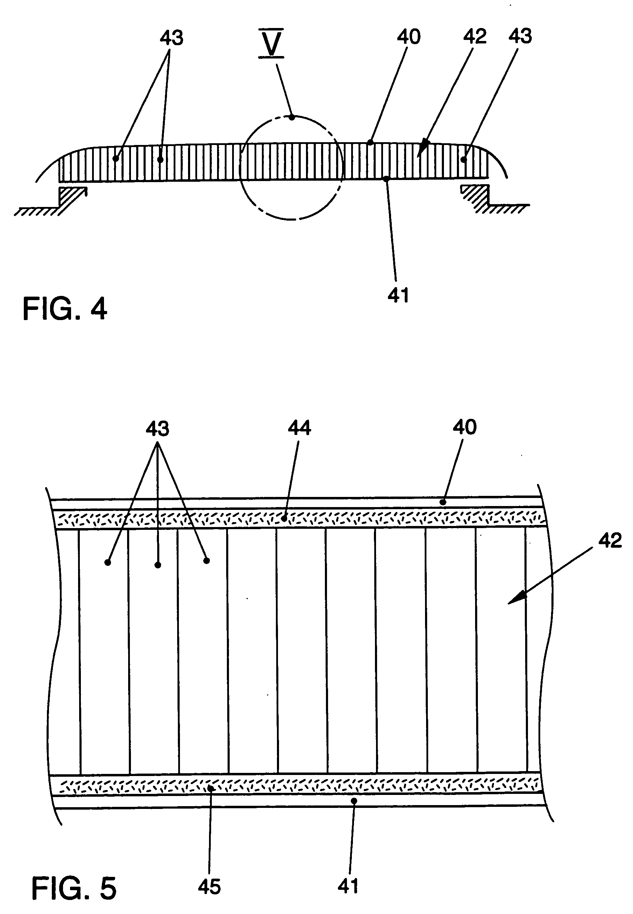

Die Figuren 4 und 5 zeigen nun eine Ausführungsform der Erfindung, bei der zwischen der Deckschale 40 und der Unterstruktur 41 eine energieabsorbierende Zwischenschicht 42 aus einer Vielzahl von parallel und senkrecht verlaufenden Waben 43 vorgesehen ist. Diese Waben, die beliebige Querschnitte, beispielsweise Polygonquerschnitte, runde Querschnitte oder elliptische Querschnitte, besitzen können, brechen bei einer bestimmten von oben auf die Fronthaube wirkenden Kraft (Kopfaufprall) zusammen und schaffen so eine Nachgiebigkeit über einen Deformationsweg, der wiederum weitgehend vom senkrechten Abstand der Deckschale 40 von der Unterstruktur 41 abhängt. Um diesen Abstand nicht zu groß werden zu lassen, ist die Steife der Unterstruktur 41 so gewählt, daß dann, wenn der Deformationsweg der Zwischenschicht 42 erschöpft ist, eine bleibende Verformung der Unterstruktur 41 und dadurch eine Umsetzung von kinetischer Energie in Verformungsarbeit erfolgt. Während also der Deformationsweg der Zwischenschicht 42 ausreicht, um - bis zu einer maximalen Aufprallgeschwindigkeit des Fahrzeugs auf den Fußgänger - bei einem Kind gefährliche Kopfverletzungen zu vermeiden, ruft der Kopf eines erwachsenen Fußgängers zusätzlich eine bleibende Verformung der Unterstruktur 41 hervor. Dies gilt übrigens für alle beschriebenen Ausführungsbeispiele der Erfindung.

Besonders zweckmäßig ist eine solche Auslegung der erfindungsgemäßen Fronthaube, daß sich eine rechteckförmige Deformationskennung (Kraft über Deformationsweg) während der Deformation der Zwischenschicht 42 ergibt.

In Figur 5 sind bei 44 und 45 Schaumkleberschichten dargestellt, die in diesem Ausführungsbeispiel sich zwischen der Zwischenschicht 42 einerseits und den beiden schalenartigen Bestandteilen 40 und 41 der Fronthaube erstrecken und dazu dienen, gefährliche Kraft- oder Spannungsspitzen bei Beginn der Deformation der Zwischenschicht 42 zu vermeiden.

Als Wabenmaterial kann Aluminium mit einer Dichte von 10 bis 80 g/l und einer lichten Weite von 5 bis 20 mm Einsatz finden. Auch Papier, gegebenenfalls mit Kunststofftränkung, oder Kunststoff, beispielsweise auf Polypropylen-Basis, kann Einsatz finden; dann wird man eine lichte Weite von 5 bis 40 mm bzw. 5 bis 10 mm verwenden. Wie bereits angedeutet, kann eine sehr unterschiedliche Wabengeometrie Verwendung finden, beispielsweise mit sechseckigem oder rechteckigem Querschnitt; auch gesickte Vielecke, die zwei oder dreidimensional verformbar sind, sowie röhrchenförmige Waben sind denkbar. Das Fügen kann, wie bereits erwähnt, unter Verwendung von Schaumkleber erfolgen; auch andere Kleber, Schweißfügungen, Lötfügungen usw. können Einsatz finden.

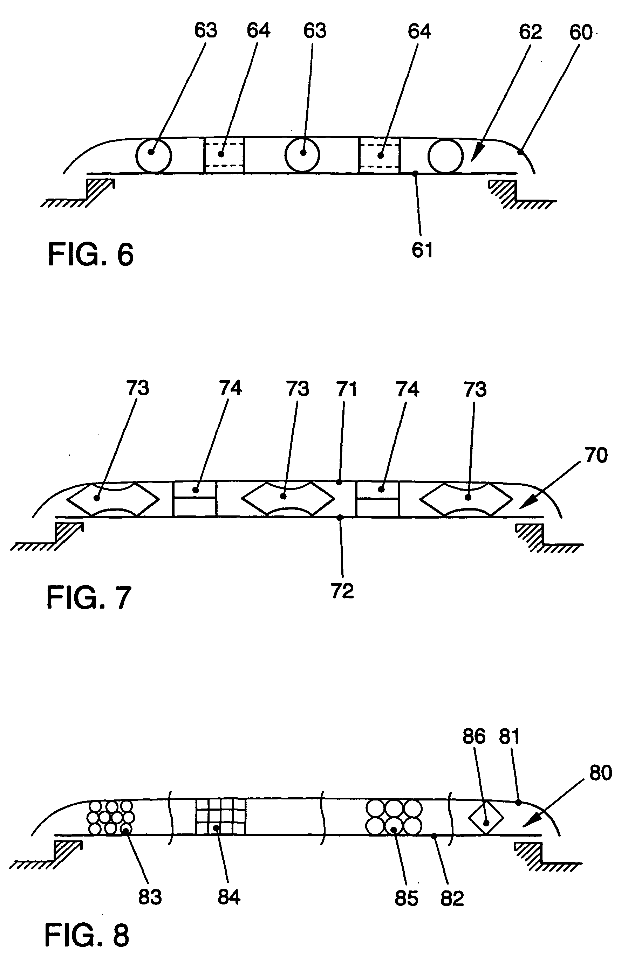

Im Zusammenhang hiermit stehen die Ausführungsformen der Erfindung nach den Figuren 6 bis 9. Betrachtet man Figur 6, so dienen als zwischen der Deckschale 60 und der Unterstruktur 61 vorgesehene Zwischenschicht 62 zylindrische Rohrabschnitte 63 (ausgerichtet in Fahrzeuglängsrichtung) und 64 (ausgerichtet in Fahrzeugquerrichtung). In Figur 7 wird die Zwischenschicht 70 gebildet durch zwischen Deckschale 71 und Unterstruktur 72 angeordnete vorverformte Rechteckrohre 73 und 74. Auch sie sind wiederum unterschiedlich ausgerichtet.

Figur 8 läßt erkennen, daß zur Bildung der Zwischenschicht 80 - die Deckschale ist mit 81, die Unterstruktur mit 82 bezeichnet - über die Ausdehnung der Zwischenschicht 80 unterschiedliche Konfigurationen vorgesehen sein können, beispielsweise mit unterschiedlichen Durchmessern, unterschiedlicher Geometrie, unterschiedlichen Schichtungsfolgen. Derartige zwischenschichtbildende Anordnungen sind mit 83, 84, 85 und 86 bezeichnet. Zusätzlich zu den bereits erwähnten Materialien kann auch Flexrohr oder Papierrohr mit radialer Verformung Einsatz finden.

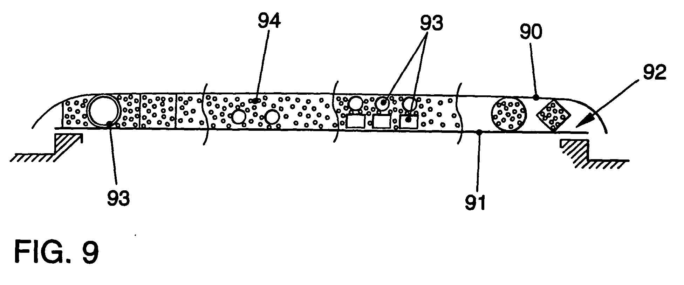

Figur 9 schließlich stellt insofern eine Weiterbildung der Ausführungsform nach Figur 8 dar, als die sich wiederum zwischen der Deckschale 90 und der Unterstruktur 91 erstreckende Zwischenschicht 92 durch eine Kombination dauernd verformbarer Teile, von denen nur eines mit 93 bezeichnet ist, mit Schaumstoff 94 gebildet ist. Auf diese Weise lassen sich beliebige Kombinationen zur Einstellung der Verformungskennung beim Kopfaufprall schaffen.

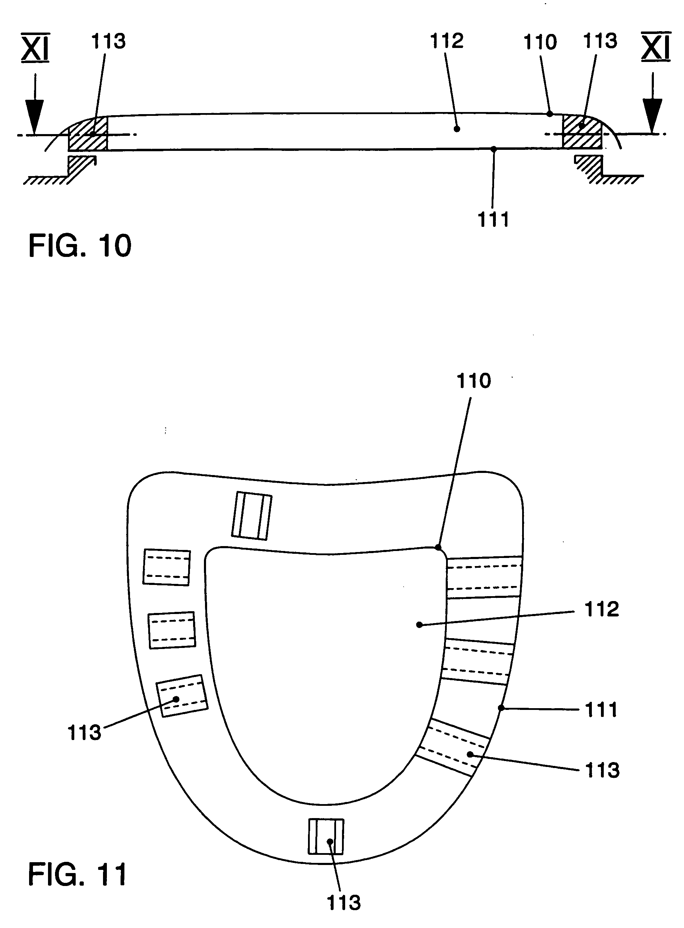

Als wesentliches Merkmal der Erfindung war hervorgehoben, daß die Deckschale - in den Figuren 10 und 11 mit 110 bezeichnet - nicht unmittelbar durch Aufliegen von der Unterstruktur 111 getragen sein darf, da andernfalls beim Kopfaufprall die Zwischenschicht 112 nicht zusammengedrückt werden würde. Wie in den Figuren 10 und 11 dargestellt, kann es aber zweckmäßig sein, zum Auffangen von Schubbeanspruchungen im normalen Fahrzeugbetrieb und zur Unterdrückung dieser Beanspruchungen beim Fußgängeraufprall Randbereiche umlaufend oder partiell mit Abstützungen 113 zu versehen, die beispielsweise aus einem Schaummaterial erhöhter Dichte bestehen.

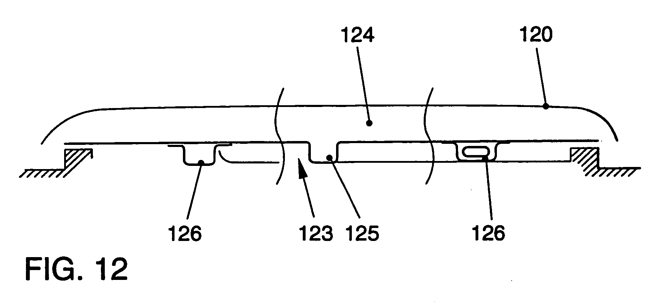

Wie bereits ausgeführt, soll die Unterschale erst dann deformiert werden, wenn die Deckschale (in Figur 12 mit 120 bezeichnet) von oben her mit einer relativ großen Kraft beaufschlagt wird, wie sie beispielsweise der Kopf eines erwachsenen Fußgängers ausübt. Figur 12 zeigt daher eine steife Ausbildung der Unterstruktur 123 (oberhalb der sich verständlicherweise wieder die deformierbare Zwischenschicht 124 befindet): Zur Versteifung sind in diesem Ausführungsbeispiel längsverlaufende Sicken 125 und aufgesetzte Rippen 126 und 127 unterschiedlicher Ausbildung und unterschiedlicher Materialien vorgesehen.

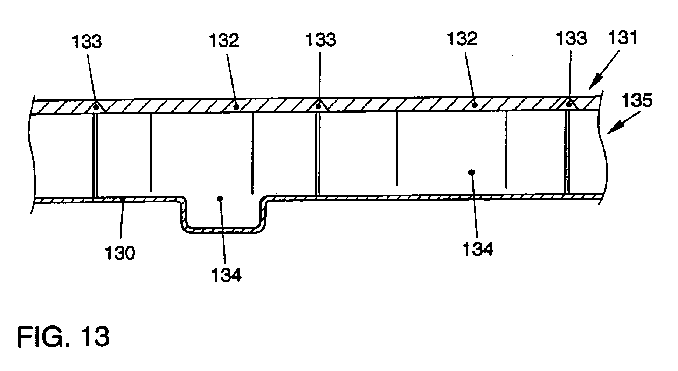

Figur 13 schließlich verwendet ebenfalls eine verrippte Unterstruktur 130, jedoch ist in diesem Ausführungsbeispiel die Deckschale 131 in Deformationsbereiche 132 mittels örtlicher Materialschwächungen 133 (die von oben her nicht erkennbar sind) unterteilt, wobei jeder Deformationsbereich 132 für sich steif ist und beim örtlichen Kopfaufprall unter Trennung in den Zonen 133 gleichsam selbständig nach unten unter Kompression des ihm jeweils zugeordneten Elements 134 der allgemein mit 135 bezeichneten Zwischenschicht bewegt wird. Hier kommt es also durch Abreißen einzelner Deformationsbereiche 132 zu einer nur partiellen Verformung der Zwischenschicht 135 und damit auch nur zu einer örtlich partiellen Energieumsetzung. Der Vorteil dieser Ausführungsform der Erfindung ist in einer möglichen höheren Festigkeit oder Steife der Zwischenschicht 135 gegenüber der bisher behandelten Gesamtverformung der Zwischenschicht beim Kopfaufprall zu sehen.

Die Steife der Deckschalenbereiche 132 hat zur Folge, daß auch bei örtlicher Beanspruchung einzelner Bereiche das gesamte jeweils unter ihnen liegende Element 134 der Zwischenschicht 135 zur Verformung herangezogen wird. Insofern liegt eine Analogie zu den vorher beschriebenen Ausführungsbeispielen der Erfindung vor, bei denen infolge der Steife der Deckschale auch bei örtlicher Beanspruchung derselben die gesamte Zwischenschicht zur Deformation herangezogen wurde.

Mit der Erfindung ist demgemäß eine gattungsgemäße Kraftfahrzeug-Fronthaube geschaffen, die die unterschiedlichen Erfordernisse beim Aufprall des Fahrzeugs auf Fußgänger unterschiedlicher Größen mit einfachsten Mitteln berücksichtigt.

## Patentansprüche

1. Als Fußgängerschutz ausgelegte Kraftfahrzeug-Fronthaube, **gekennzeichnet durch** eine schalenartige Unterstruktur (1), die bevorzugt alle Beschläge der Fronthaube trägt, und eine obere Deckschale (2), die von einer energieabsorbierenden Zwischenschicht in einem Abstand von der Unterstruktur (1) ohne direkte Abstützung an der Unterstruktur (1) an dieser gehalten ist, wobei dieser Abstand und die Steifigkeiten von Unterstruktur (1) und Deckschale (2) derart gewählt sind, dass örtliche Verbeulungen der Deckschale (2) **durch** betriebsbedingte Beanspruchungen und **durch** Kopfaufprall eines Fußgängers mit Kindsgröße ausgeschlossen sind, dass ferner der von der energieabsorbierenden Zwischenschicht (3) definierte Abstand als Deformationsweg (x) für den Kopfaufprall eines Fußgängers mit Kindsgröße gewählt ist, und dass bleibende Verformungen der Unterstruktur (1) erst nach dieser Energieabsorbtion **durch** die Zwischenschicht (3) beim Kopfaufprall eines Fußgängers mit Erwachsenengröße auftreten.

2. Fronthaube nach Anspruch 1, **dadurch gekennzeichnet, dass** die Unterstruktur (1) eine Steife aufweist, die bleibende Verformungen der Unterstruktur (1) erst bei einem Kopfaufprall eines Fußgängers mit Erwachsenengröße zulässt.

3. Fronthaube nach Anspruch 1 oder 2, **dadurch gekennzeichnet, dass** die Unterstruktur (123) Versteifungen nach Art von Sicken (125) und Rippen (126) aufweist.

4. Fronthaube nach einem der Ansprüche 1 bis 3, **dadurch gekennzeichnet, dass** die Masse der Deckschale (2) auf einen Wert begrenzt ist, der die erforderliche Energieabsorbtion in der Zwischenschicht (3) bei dem Kopfaufprall des Fußgängers mit Kindsgröße zulässt.

5. Fronthaube nach einem der Ansprüche 1 bis 4, **dadurch gekennzeichnet, dass** Deckschale (2) und Zwischenschicht (3) derart ausgelegt sind, dass bei dem Kopfaufprall des Fußgängers eine im wesentlichen rechteckförmige Kraft-Deformationsweg-Kennung sichergestellt ist.

6. Fronthaube nach einem der Ansprüche 1 bis 5, **dadurch gekennzeichnet**, das bei einer Deckschale (2) mit die Zwischenschicht (3) übergreifend geformten Randpartien diese derart ausgelegt sind, dass sie nach Einbau der Fronthaube einem Fahrzeug-Aufbau (4) unter Belassung eines Freigangs (V) zur Sicherstellung des Deformationswegs (x) gegenüberstehen.

7. Fronthaube nach einem der Ansprüche 1 bis 6, **dadurch gekennzeichnet**, das die Deckschale (131) durch Zonen (133) verringerter Festigkeit in Deformationsbereiche (132) unterteilt ist.

8. Fronthaube nach einem der Ansprüche 1 bis 7, **dadurch gekennzeichnet**, das die Zwischenschicht (92) Kunststoff und/oder Metallschäume (94) enthält.

9. Fronthaube nach einem der Ansprüche 1 bis 8, **dadurch gekennzeichnet**, das die Zwischenschicht (92) Deformationsprofile (93) enthält.

10. Fronthaube nach einem der Ansprüche 1 bis 9, **dadurch gekennzeichnet, dass** zwischen der Deckschale (40) und/oder der Unterstruktur (41) einerseits und der Zwischenschicht (42) andererseits ein Spannungsspitzen bei Verformungseinleitung vermeidender Schaumkleber (44, 45) vorgesehen ist.

11. Fronthaube nach einem der Ansprüche 1 bis 10, **gekennzeichnet durch** über den Verlauf der Zwischenschicht (92) unterschiedliche Auslegung derselben.

12. Fronthaube nach einem der Ansprüche 1 bis 11, **gekennzeichnet durch** Schubbeanspruchungen aufnehmende örtliche Abstützungen (113) aus Schaummaterial erhöhter Dichte zwischen Randbereichen von Deckschale (110) und Unterstruktur (111).
